# EUROPEAN PATENT APPLICATION

(11) **EP 3 786 852 A1**
(43) Date of publication of application: **03.03.2021**
(21) Application number: 19211746.3
(22) Date of filing: 27.11.2019
(51) Int. Cl.: G06N 3/04, G06N 3/08

(54) **METHOD FOR SUBNETWORK SAMPLING, AND METHOD AND DEVICE FOR BUILDING A HYPERNETWORK TOPOLOGY**

(30) Priority: 29.08.2019 CN 201910810199
(71) Applicant: Beijing Xiaomi Mobile Software Co., Ltd., Beijing 100085 (CN)
(72) Inventor: CHU, Xiangxiang, Beijing, 100085 (CN); XU, Ruijun, Beijing, 100085 (CN); ZHANG, Bo, Beijing, 100085 (CN); LI, Jixiang, Beijing, 100085 (CN); LI, Qingyuan, Beijing, 100085 (CN); WANG, Bin, Beijing, 100085 (CN)
(74) Representative: Gevers Patents

(57) **Abstract**

Provided are a method for subnetwork sampling and a method and device for building a hypemetwork topology. The method for subnetwork sampling is applicable to a hypemetwork topology. The hypemetwork topology includes n layers, each layer includes at least two substructures, and each substructure includes Batch Normalization (BN) modules in one-to-to correspondence with the substructures of a closest upper layer, n>0 and n being a positive integer. The method includes that: a substructure A_{(N)} of the Nth layer is selected, 1>N≥n; a selected substructure A_{(N-1)} of the (N-1)th layer is determined; a BN module C_{(B)} in one-to-to correspondence with A_{(N-1)} is determined from the substructure A_{(N)}; and the substructure A_{(N)} is added into a subnetwork through the BN module C_{(B)}.

## Description

### TECHNICAL FIELD

Embodiments of the present disclosure generally relate to neural networks, and more particularly, to a method for subnetwork sampling and a method and device for building a hypernetwork topology.

### BACKGROUND

Neural networks have been applied widely in various fields. In some fields such as Neural Architecture Search (NAS), a method of generating an independent neural network by search each time and acquiring an index by training is confronted with a problem that efficiency of evaluation is low, which greatly restricting the speed of a search algorithm. For solving this problem, a hypernetwork including all search network structure spaces is trained in some NAS methods, all substructures in the hypernetwork may share a parameter when different subnetworks are constructed, and after the hypernetwork is trained to a certain extent, subnetwork sampling and index evaluation may be performed without retraining the subnetworks. A substructure may usually include a plurality of Batch Normalization (BN) modules, and each BN module may be performed on characteristics output by its closest upper layer to overcome training difficulties caused by changes in data distribution of an intermediate layer. At present, BN module has become an essential part in a convolutional neural network.

In some technologies, each layer of a hypernetwork includes multiple selectable substructures, and in a subnetwork path in a hypernetwork topology, each substructure of each layer may include a BN module and each BN module may be connected with each substructure of its closest upper layer. In such case, a BN module of each substructure is required to learn a BN parameter for an output characteristic of each substructure of its closest upper layer, and particularly when the output characteristics of different substructures of the closest upper layer are greatly different, the BN module of the present layer cannot reach an ideal learning state. Therefore, after a subnetwork is sampled, training the subnetwork has to be continued to ensure that a parameter of each BN module in the subnetwork may reach the ideal learning state for a subnetwork path (i.e., a substructure connected with the closest upper layer of the BN layer). In such case, additional training time is required by the sampled subnetwork.

### SUMMARY

For solving the problem in a related art, the embodiments of the present disclosure provide a method for subnetwork sampling and a method and device for building a hypernetwork topology.

According to a first aspect of the embodiments of the present disclosure, a method for subnetwork sampling is provided, which may be applied to a hypernetwork topology, the hypernetwork topology including n layers, each layer including at least two substructures, each substructure including a BN module in one-to-to correspondence with a substructure of a closest upper layer, n>0 and n being a positive integer, the method including that: a substructure A_{(N)} of a Nth layer is selected, 1>N≥n; a selected substructure A_{(N-1)} of a (N-1)th layer is determined; a BN module C_{(B)} in one-to-to correspondence with the substructure A_{(N-1)} is determined from the substructure A_{(N)}; and the substructure A_{(N)} is added into a subnetwork through the BN module C_{(B)}.

In an example, the method may further include that: a substructure A₍₁₎ of a first layer is selected.

In an example, the operation that the substructure A_{(N)} is added into the subnetwork through the BN module C_{(B)} may include that: the BN module C_{(B)} is connected with the substructure A_{(N-1)} to add the substructure A_{(N)} into the subnetwork.

In an example, the substructure may further include an output module configured to output a characteristic; and the operation that the BN module C_{(B)} is connected with the substructure A_{(N)} may further include that: the BN module C_{(B)} is connected with the output module of the substructure A_{(N-1)}.

According to a second aspect of the embodiments of the present disclosure, a method for building a hypernetwork topology is provided, which may include that: an n-layer structure is built, n>0 and n being a positive integer; m substructures are arranged in each layer, m>0; for each of a second layer to a nth layer, m BN modules are arranged in each substructure; and for each of the second layer to the nth layer, a one-to-one correspondence is established between each BN module and a substructure of a (N-1)th layer.
According to a third aspect of the embodiments of the present disclosure, a device for subnetwork sampling is provided, which may be applied to subnetwork sampling in a hypernetwork topology, the hypernetwork topology including n layers, each layer including at least two substructures, each substructure including a BN module in one-to-to correspondence with a substructures of a closest upper layer, n>0 and n being a positive integer, the device including: a selection unit, configured to select a substructure A_{(N)} of a Nth layer, 1>N≥n; a determination unit, configured to determine selected substructure A_{(N-1)} of the (N-1)th layer; a picking unit, configured to determine from the substructure A(N) a BN module C_{(B)} in one-to-to correspondence with the substructure A_{(N-1)}; and a connection unit, configured to add the substructure A_{(N)} into a subnetwork through the BN module C_{(B)}.

In an example, the selection unit may further be configured to select a substructure A₍₁₎ of a first layer.

In an example, the connection unit may further be configured to connect the BN module C_{(B)} with the substructure A_{(N-1)} to add the substructure A_{(N)} into the subnetwork.

In an example, the substructure may further include an output module configured to output a characteristic; and the connection unit may further be configured to connect the BN module C_{(B)} with the output module of the substructure A_{(N-1}).

According to a fourth aspect of the embodiments of the present disclosure, a device for building a hypernetwork topology is provided, which may include: a layer building unit, configured to build an n-layer structure, n>0 and n being a positive integer; a substructure building unit, configured to arrange m substructures in each layer, m>0, and further configured to, for each of a second layer to a nth layer, arrange m BN modules in each substructure; and a relationship establishment unit, configured to, for each of the second layer to the nth layer, establish a one-to-one correspondence between each BN module and a substructure of a (N-1)th layer.

According to a fifth aspect of the embodiments of the present disclosure, an electronic device is provided, which may include: a memory, configured to store an instruction; and a processor, configured to call the instruction stored in the memory to execute the method for subnetwork sampling of the first aspect or the method for building a hypernetwork topology of the second aspect.

According to a sixth aspect of the embodiments of the present disclosure, a computer-readable storage medium is provided, which may have stored an instruction, the instruction being executable by a processor to execute the method for subnetwork sampling of the first aspect or the method for building a hypernetwork topology of the second aspect.

The technical solutions provided in the embodiments of the present disclosure may have the following beneficial effects. A dynamic BN module, i.e., a BN module in one-to-to correspondence with a structure of a closest upper layer, may be arranged in substructures of a hypernetwork topology, and when a subnetwork is sampled, the corresponding BN module may be used according to a selected substructure of the closest upper layer, so that the sampled subnetwork needs no additional training time and can be directly used. Therefore, efficiency is improved.

It is to be understood that the above general descriptions and detailed descriptions below are only exemplary and explanatory and not intended to limit the embodiments of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart illustrating a method for subnetwork sampling according to an exemplary embodiment.
Fig. 2 is a schematic diagram illustrating a hypernetwork topology according to an exemplary embodiment.
Fig. 3 is a flow chart illustrating another method for subnetwork sampling according to an exemplary embodiment.
Fig. 4 is a flow chart illustrating a method for building a hypernetwork topology according to an exemplary embodiment.
Fig. 5 is a schematic diagram illustrating a subnetwork sampling device according to an exemplary embodiment.
Fig. 6 is a schematic diagram illustrating a device for building a hypernetwork topology according to an exemplary embodiment.
Fig. 7 is a schematic block diagram illustrating an electronic device according to an exemplary embodiment.
Fig. 8 is a schematic block diagram illustrating another device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

Terms used in the present disclosure are only adopted for the purpose of describing specific embodiments and not intended to limit the present disclosure. "A/an" and "the" in a singular form in the present disclosure and the appended claims are also intended to include a plural form, and a plural form is intended to include a singular form too, unless other meanings are clearly denoted throughout the present disclosure. It is also to be understood that term "and/or" used in the present disclosure refers to and includes one or any or all possible combinations of multiple associated items that are listed.

It is to be understood that, although terms "first", "second", "third" and the like may be adopted to describe various information in the present disclosure, the information should not be limited to these terms. These terms are only adopted to distinguish the information of the same type. For example, without departing from the scope of the present disclosure, first information may also be called second information and, similarly, second information may also be called first information.

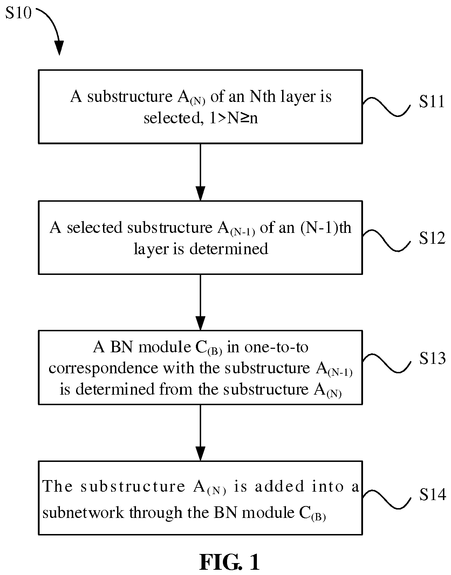

In an existing hypernetwork topology, after a subnetwork is sampled, the subnetwork is further needed to be trained, which requires additional time and operation cost. An embodiment provides a method S10 for subnetwork sampling. Referring to Fig. 1, Fig. 1 is a schematic flow block diagram of a method S10 for subnetwork sampling according to an exemplary embodiment. The method S10 for subnetwork sampling may be applied to a hypernetwork topology. The hypernetwork topology may include n layers, each layer may include at least two substructures, and each substructure may include at least one BN module in one-to-to correspondence with at least one substructure of a closest upper layer, n>0 and n being a positive integer.

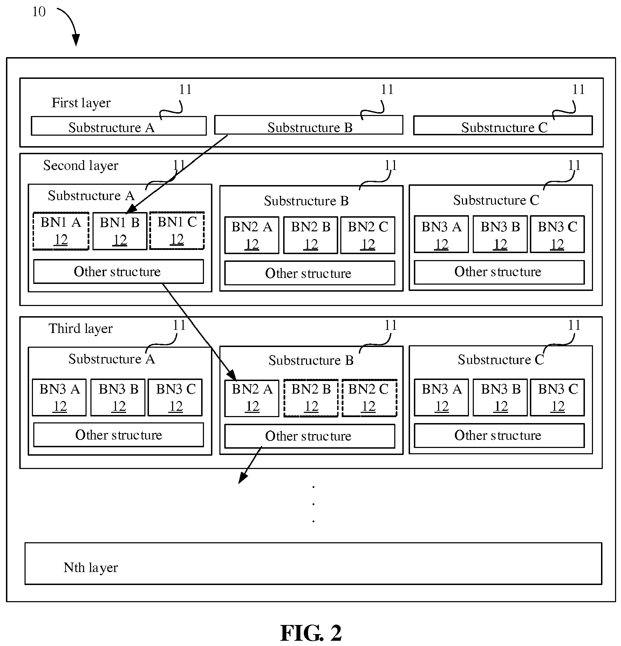

As shown in Fig. 2, the hypernetwork topology 10 may include multiple layers, and multiple substructures 11 may be arranged in each layer; each substructure 11 of a nth layer may include multiple BN modules 12, n being an integer greater than 1; and the multiple BN modules 12 of each substructure 11 of the nth layer may correspond to the multiple substructures 11 of a(n-1)th layer respectively. As shown in the figure, each layer has substructure A, substructure B and substructure C, and correspondingly, each substructure from the second layer to the nth layer includes BN module A, BN module B and BN module C; and the BN module A, the BN module B and the BN module C correspond to the substructure A, substructure B and substructure C of a closest upper layer respectively.

The method S10 for subnetwork sampling may include the following operations.

In S11, a substructure A_{(N)} of a Nth layer is selected, 1>N≥n.

When a subnetwork is sampled, a substructure is required to be selected from each layer of the hypernetwork topology and subjected to a connection operation. In the Nth layer of the hypernetwork topology, the substructure A_{(N)} may be selected according to a requirement.

In S12, a selected substructure A_{(N-1)} of the (N-1)th layer is determined.

The selected substructure A_{(N-1)} of the (N-1)th layer, i.e., the closest upper layer, may be determined as a basis for selection of a BN module from the Nth layer.

In S13, a BN module C_{(B)} in one-to-to correspondence with A_{(N-1)} is determined from the substructure A_{(N)}.

The corresponding BN module in the selected substructure of the present layer may be determined according to the determined selected substructure of the closest upper layer, thereby ensuring personalized normalization over characteristics output by different substructures of the closest upper layer to further ensure that a result obtained at the substructures of the present layer is more accurate.

In S14, the substructure A_{(N)} is added into a subnetwork through the BN module C_{(B)}.

The substructure A_{(N)} of the present layer may be added into the subnetwork through the BN module C_{(B)} in one-to-to correspondence with the selected substructure of the closest upper layer to ensure different normalization processing of different data sources and ensure personalized processing of different sources.

According to the method of the embodiment, selection of a substructure of each layer and selection of a BN module in the substructure may be made, thereby ensuring that a sampled subnetwork requires no additional training time and can be used directly.

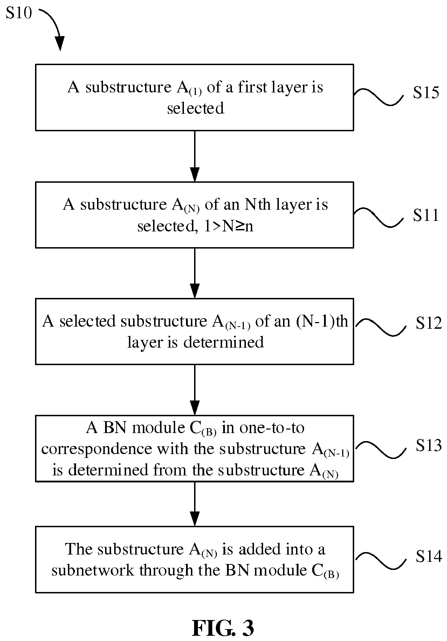

Fig. 3 is a flow chart illustrating a method S10 for subnetwork sampling according to another embodiment of the present disclosure. Referring to Fig. 3, in an example, the method S10 for subnetwork sampling may further include the following operation. In S15, a substructure A₍₁₎ of the first layer is selected. In the process of subnetwork sampling, the first layer has no upper layer and thus may directly receive data to be detected rather than receive data from different substructures of an upper layer. Therefore, no BN module is required to be arranged for the first layer. Moreover, during selection, a substructure of the first layer may be directly selected according to a requirement.

In an example, the operation that the substructure A_{(N)} is added into the subnetwork through the BN module C_{(B)} may include that: the BN module C_{(B)} is connected with the substructure A_{(N-1)} to add the substructure A_{(N)} into the subnetwork. The BN module may be connected with the substructure of the closest upper layer and may receive a characteristic output by the substructure of the closest upper layer, thereby adding the substructure A_{(N)} of the present layer into the subnetwork.

In an example, the substructure may further include an output module configured to output a characteristic; and the operation that the BN module C_{(B)} is connected with the substructure A_{(N)} may further include that: the BN module C_{(B)} is connected with the output module of the substructure A_{(N-1)}. Each substructure may be configured to receive data, perform data processing and output characteristic data, and the characteristic data may be output through the output module of the substructure, so that the BN module may be connected with the output module of the substructure of the closest upper layer to receive the characteristic data and perform normalization processing. Therefore, efficiency of the subnetwork is improved.

Through the above embodiment, the substructures may adopt corresponding BN modules for different substructures of their respective closest upper layers, so that independent processing may be carried out for characteristics output by different substructures, a good training effect can be ensured, and a sampled subnetwork requires no additional training time.

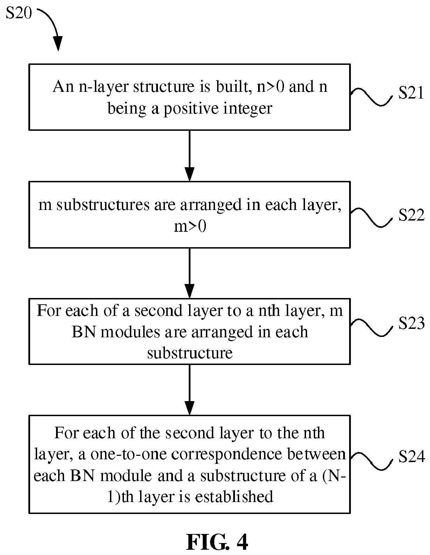

Based on the same concept, an embodiment of the present disclosure also provides a method S20 for building a hypernetwork topology. As shown in Fig. 4, the method may include the following operations.

In S21, an n-layer structure is built, n>0 and n is a positive integer.

A constructed hypernetwork topology may refer to Fig. 2. The n-layer structure of the hypernetwork topology may be constructed.

In S22, m substructures are arranged in each layer, m>0.

Multiple substructures configured for characteristic extraction may be arranged in each layer, and parameters may be shared among the substructures.

In S23, for each of the second layer to the nth layer, m BN modules are arranged in each substructure.

In each of the second layer to the nth layer, each substructure may need to receive characteristics output by the m substructures of the closest upper layer, and the characteristics output by each substructure of the closest upper layer may be different, so that the m (consistent with the number of substructures of the closest upper layer) BN modules may also be arranged in each substructure of the second layer to the nth layer. The BN module may be configured to perform BN on the output characteristics of the closest upper layer to overcome the training difficulties caused by changes in data distribution of intermediate layers.

In S24, for each of the second layer to the nth layer, a one-to-one correspondence between each BN module and a substructure of a (N-1)th layer is established.

After the m BN modules are arranged, a one-to-one correspondence between each BN module and a substructure of a closest upper layer may be established to ensure there is one, namely exclusive, BN module conrresponding to each substructure of the closest upper layer. In the subsequent training or subnetwork sampling, a corresponding BN module may be determined according to a selected substructure of a closest upper layer to perform data normalization processing in a substructure of a present layer through.

For the hypernetwork topology constructed by the method S20 for building a hypernetwork topology, training efficiency may be improved, and a sampled subnetwork may be directly used without additional training.

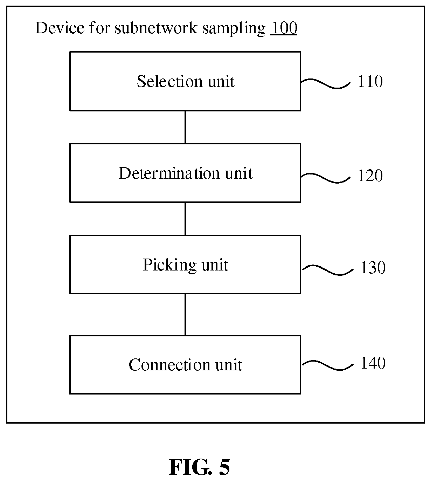

Based on the same concept, referring to Fig. 5, an embodiment of the present disclosure also provides a device 100 for subnetwork sampling, which may be applied to subnetwork sampling in a hypernetwork topology, the hypernetwork topology including n layers, each layer including at least two substructures, each substructure including at least one BN module in one-to-to correspondence with at least one substructure of a closest upper layer, n>0 and n being a positive integer. The device 100 for subnetwork sampling may include: a selection unit 110, configured to select a substructure A_{(N)} of a Nth layer, 1>N≥n; a determination unit 120, configured to determine a selected substructure A_{(N-1)} of a (N-1)th layer; a picking unit 130, configured to determine a BN module C_{(B)} in one-to-to correspondence with A_{(N-1)} from the substructure A_{(N)}; and a connection unit 140, configured to add the substructure A_{(N)} into a subnetwork through the BN module C(B).

In an example, the selection unit 110 may be further configured to select a substructure A₍₁₎ of a first layer.

In an example, the connection unit 140 may be further configured to connect the BN module C_{(B)} with the substructure A_{(N-1)} to add the substructure A_{(N)} into the subnetwork.

In an example, the each substructure may further include an output module configured to output a characteristic; and the connection unit 140 may be further configured to connect the BN module C_{(B)} with the output module of the substructure A_{(N-1)}.

With respect to the device 100 for subnetwork sampling in the above embodiment, the specific manners for performing operations for individual units therein have been described in detail in the embodiment regarding the method, which will not be elaborated herein.

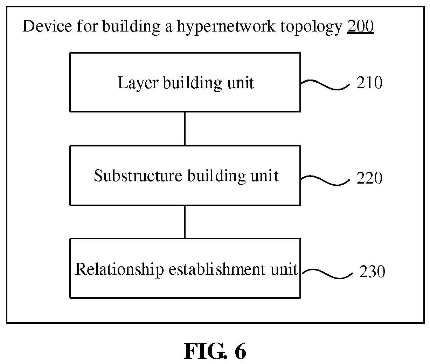

Based on the same inventive concept, referring to Fig. 6, an embodiment of the present disclosure also provides a device 200 for building a hypernetwork topology, which includes: a layer building unit 210, configured to build an n-layer structure, n>0 and n being a positive integer; a substructure building unit 220, configured to arrange m substructures in each layer, m>0, and further configured to, for each of a second layer to a nth layer, arrange m BN modules in each substructure; and a relationship establishment unit 230, configured to, for each of the second layer to the nth layer, establish a one-to-one correspondence between each BN module and a substructure of a (N-1)th layer.

With respect to the device 200 for building a hypernetwork topology in the above embodiment, the specific manners for performing operations for individual units therein have been described in detail in the embodiment regarding the method, which will not be elaborated herein.

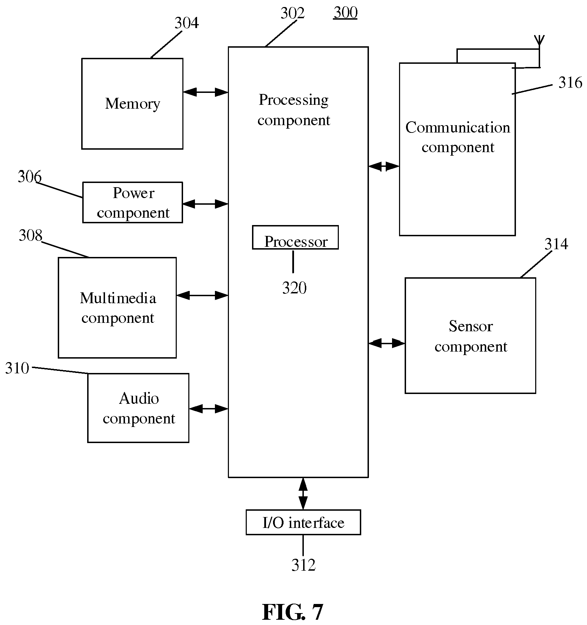

Referring to Fig. 7, a device 300 is provided, which may include one or more of the following components: a processing component 302, a memory 304, a power component 306, a multimedia component 308, an audio component 310, an Input/Output (I/O) interface 312, a sensor component 314, and a communication component 316.

The processing component 302 is typically configured to control overall operations of the device 300, such as the operations associated with display, telephone calls, data communications, camera operations, and recording operations. The processing component 302 may include one or more processors 320 to execute instructions to perform all or part of the operations in the abovementioned method. Moreover, the processing component 302 may include one or more modules which facilitate interaction between the processing component 302 and other components. For instance, the processing component 302 may include a multimedia module to facilitate interaction between the multimedia component 308 and the processing component 302.

The memory 304 is configured to store various types of data to support the operation of the device 300. As examples, such data may be instructions for any application programs or methods operated on the device 300, contact data, phonebook data, messages, pictures, video, etc. The memory 304 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 306 is configured to provide power for various components of the device 300. The power component 306 may include a power management system, one or more power supplies, and other components associated with generation, management and distribution of power for the device 300.

The multimedia component 308 may include a screen for providing an output interface between the device 300 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 308 may include a front camera and/or a rear camera. The front camera and/or the rear camera may receive external multimedia data when the device 300 is in an operation mode, such as a photographing mode or a video mode. Each of the front camera and the rear camera may be a fixed optical lens system or have focusing and optical zooming capabilities.

The audio component 310 is configured to output and/or input an audio signal. For example, the audio component 310 includes a Microphone (MIC), and the MIC is configured to receive an external audio signal when the device 300 is in the operation mode, such as a call mode, a recording mode and a voice recognition mode. The received audio signal may further be stored in the memory 304 or sent through the communication component 316. In some embodiments, the audio component 310 further includes a speaker configured to output the audio signal.

The I/O interface 312 is configured to provide an interface between the processing component 302 and a peripheral interface module, and the peripheral interface module may be a keyboard, a click wheel, a button and the like. The button may include, but not limited to: a home button, a volume button, a starting button and a locking button.

The sensor component 314 may include one or more sensors configured to provide status assessment in various aspects for the device 300. For instance, the sensor component 314 may detect an on/off status of the device 300 and relative positioning of components, such as a display and small keyboard of the device 300, and the sensor component 314 may further detect a change in a position of the device 300 or a component of the device 300, presence or absence of contact between the user and the device 300, orientation or acceleration/deceleration of the device 300 and a change in temperature of the device 300. The sensor component 314 may include a proximity sensor configured to detect presence of an object nearby without any physical contact. The sensor component 314 may also include a light sensor, such as a Complementary Metal Oxide Semiconductor (CMOS) or Charge Coupled Device (CCD) image sensor, configured for use in an imaging APP. In some embodiments, the sensor component 314 may also include an acceleration sensor, a gyroscope sensor, a magnetic sensor, a pressure sensor or a temperature sensor.

The communication component 316 is configured to facilitate wired or wireless communication between the device 300 and other equipment. The device 300 may access a communication-standard-based wireless network, such as a Wireless Fidelity (WiFi) network, a 2nd-Generation (2G) or 3rd-Generation (3G) network or a combination thereof. In an exemplary embodiment, the communication component 316 receives a broadcast signal or broadcast associated information from an external broadcast management system through a broadcast channel. In an exemplary embodiment, the communication component 316 further includes a Near Field Communication (NFC) module to facilitate short-range communication. For example, the NFC module may be implemented based on a Radio Frequency Identification (RFID) technology, an Infrared Data Association (IrDA) technology, an Ultra-WideBand (UWB) technology, a Bluetooth (BT) technology and another technology.

In an exemplary embodiment, the device 300 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a computer-readable storage medium including an instruction, such as the memory 304 including an instruction, and the instruction may be executed by the processor 320 of the device 300 to implement the abovementioned method. For example, the computer-readable storage medium may be a ROM, a Compact Disc Read-Only Memory (CD-ROM), a magnetic tape, a floppy disc, an optical data storage device and the like.

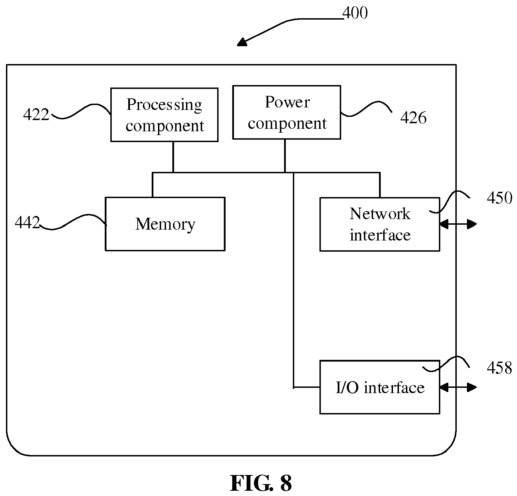

Fig. 8 is a block diagram of an electronic device 400 according to an exemplary embodiment. For example, the electronic device 400 may be provided as a server. Referring to Fig. 8, the electronic device 400 may include: a processing component 422, further including one or more processors; and a memory resource represented by a memory 442, configured to store an instruction executable for the processing component 422, for example, an application program. The application program stored in the memory 442 may include one or more than one module, each of which corresponds to a set of instructions. In addition, the processing component 422 is configured to execute the instruction to execute the abovementioned method.

The electronic device 400 may further include a power component 426 configured to execute power management of the electronic device 400, a wired or wireless network interface 450 configured to connect the electronic device 400 to a network and an I/O interface 458. The electronic device 400 may be operated based on an operating system stored in the memory 442, for example, Windows ServerTM, Mac OS XTM, UnixTM, LinuxTM, FreeBSDTM or the like.

Other implementation solutions of the present disclosure will be apparent to those skilled in the art based on the specification and implementation of the embodiments of the present disclosure. This application is intended to cover any variations, uses, or adaptations of the embodiments of the present disclosure following the general principles thereof and including such departures from the embodiments of the present disclosure as come within known or customary practice in the art. It is intended that the specification and examples be considered as exemplary only, with a true scope and spirit of the embodiments of the present disclosure as indicated by the following claims.

It will be appreciated that the embodiments of the present disclosure are not limited to the exact construction that has been described above and illustrated in the accompanying drawings, and that various modifications and changes may be made without departing from the scope thereof. It is intended that the scope of the embodiments of the present disclosure only be limited by the appended claims.

### INDUSTRIAL APPLICABILITY

In the embodiments of the present disclosure, a dynamic BN module, i.e., a BN module in one-to-to correspondence with a closest upper layer, may be arranged in a substructure of a hypernetwork topology, and when a subnetwork is sampled, the corresponding BN module may be used according to the selected substructure of a closest upper layer, so that the sampled subnetwork requires no additional training time and may be directly used. Therefore, efficiency is improved.

## Claims

1. A method for subnetwork sampling, **characterized in that**, applicable to a hypernetwork topology, the hypernetwork topology comprising n layers, each layer comprising at least two substructures, each substructure comprising a Batch Normalization, BN, module in one-to-one correspondence with a substructure of a closest upper layer, n>0 and n being a positive integer,
the method comprising:
selecting (S11) a substructure A_{(N)} of a N^{th} layer, 1>N≥n;
determining (S12) a selected substructure A_{(N-1)} of a (N-1)^{th} layer;
determining(S13), from the substructure A_{(N)}, a BN module C_{(B)} in one-to-to correspondence with the substructure A_{(N-1)} ; and
adding (S14) the substructure A_{(N)} into a subnetwork through the BN module C_{(B)}.

2. The method of claim 1, further comprising:
selecting a substructure A₍₁₎ of a first layer.

3. The method of claim 1 or 2, wherein adding the substructure A_{(N)} into the subnetwork through the BN module C_{(B)} comprises:
connecting the BN module C_{(B)} with the substructure A_{(N-1)} to add the substructure A_{(N)} into the subnetwork.

4. The method of claim 3, wherein the substructure further comprises an output module configured to output a characteristic; and
connecting the BN module C_{(B)} with the substructure A_{(N)} further comprises:
connecting the BN module C_{(B)} with the output module of the substructure A_{(N-1)}.

5. A method for building a hypernetwork topology, **characterized in that**, comprising:
building (S21) an n-layer structure, n>0 and n being a positive integer;
arranging (S22) m substructures in each layer, m>0;
for each of a second layer to a n^{th} layer, arranging (S23) m Batch Normalization (BN) modules in each substructure; and
for each of the second layer to the nth layer, establishing (S24) a one-to-one correspondence between each BN module and a substructure of a (N-1)^{th} layer.

6. A device for subnetwork sampling, **characterized in that**, applicable to subnetwork sampling in a hypernetwork topology, the hypernetwork topology comprising n layers, each layer comprising at least two substructures, each substructure comprising a Batch Normalization, BN, module in one-to-to correspondence with a substructure of a closest upper layer, n>0 and n being a positive integer, the device comprising:
a selection unit(110), configured to select a substructure A_{(N)} of a N^{th} layer, 1>N≥n;
a determination unit(120), configured to determine a selected substructure A_{(N-1)} of a (N-1)^{th} layer;
a picking unit(130), configured to determine, from the substructure A_{(N)}, a BN module C_{(B)} in one-to-to correspondence with the substructure A_{(N-1)}; and
a connection unit(140), configured to add the substructure A_{(N)} into a subnetwork through the BN module C_{(B)}.

7. The device of claim 6, wherein the selection unit is further configured to select a substructure A₍₁₎ of a first layer.

8. The device of claim 6 or 7, wherein the connection unit is further configured to connect the BN module C_{(B)} with the substructure A_{(N-1)} to add the substructure A_{(N)} into the subnetwork.

9. The device of claim 8, wherein the each substructure further comprises an output module configured to output a characteristic; and the connection unit is further configured to connect the BN module C_{(B)} with the output module of the substructure A_{(N-1)}.

10. A device for building a hypernetwork topology, **characterized in that** the device comprising:
a layer building unit(210), configured to build an n-layer structure, n>0 and n being a positive integer;
a substructure building unit(220), configured to arrange m substructures in each layer, m>0,and further configured to, for each of a second layer to a n^{th} layer, arrange m Batch Normalization (BN) modules in each substructure; and
a relationship establishment unit(230), configured to, for each of the second layer to the n^{th} layer, establish a one-to-one correspondence between each BN module and a substructure of a (N-1)^{th} layer.

11. An electronic device, **characterized in that** the electronic device comprising:
a memory(304), configured to store an instruction; and
a processor(320), configured to call the instruction stored in the memory to execute the method for subnetwork sampling according to any one of the preceding claims 1 to 4 or the method for building a hypernetwork topology of claim 5.

12. A computer-readable storage medium, having instructions stored thereon for execution by a processor to implement the method for subnetwork sampling according to any one of the preceding claims 1 to 4 or the method for building a hypernetwork topology of claim 5.
